# Europäisches Patentamt
# European Patent Office
# Office européen des brevets

(19)

(11) Numéro de publication: **0 215 082 B1**

# FASCICULE DE BREVET EUROPÉEN

(12)

(45) Date de publication du fascicule du brevet:
**13.09.89**

(21) Numéro de dépôt: **86901889.5**

(22) Date de dépôt: **11.03.86**

(86) Numéro de dépôt international:
**PCT/FR 86/00077**

(87) Numéro de publication internationale:
**WO 86/05526 (25.09.86 Gazette 86/21)**

(51) Int. Cl.⁴: **D 01 F 2/00, C 08 L 97/02**

(54) **PROCEDE POUR LA PREPARATION DE SOLUTIONS D'UN MATERIAU LIGNO-CELLULOSIQUE ET SOLUTIONS OBTENUES.**

(30) Priorité: **14.03.85 FR 8503994**

(43) Date de publication de la demande:
**25.03.87 Bulletin 87/13**

(45) Mention de la délivrance du brevet:
**13.09.89 Bulletin 89/37**

(84) Etats contractants désignés:
**AT BE CH DE GB IT LI LU NL SE**

(56) Documents cité:
**FR-A-2 423 559**

**Chemical Abstracts, vol. 102, no. 10, 11th March 1985, p. 63, no. 80174x
Chemical Abstracts, vol. 73, no. 26, 28th December 1970, p. 63, no. 132135q
Journal of Polymer Science: "Polymer Letters Edition", vol. 22, 1984, John Wiley & sons, Inc. (US), "Spherulitic precipitation of cellulose from amine-oxide solutions", pp. 163-171**

(73) Titulaire: **CENTRE NATIONAL DE LA RECHERCHE SCIENTIFIQUE (CNRS), 15, Quai Anatole France, F-75700 Paris Cedex 07 (FR)**

(72) Inventeur: **CHANZY, Henri, 37, rue du Doyeu Gosse, F-38700 La Tronche (FR)**
Inventeur: **PAILLET, Michél, 20, place des Géants, F-38100 Grenoble (FR)**
Inventeur: **PEGUY, Alain, 12, allée du Pré Blanc, F-38240 Meylan (FR)**

(74) Mandataire: **Laurent, Michel, Cabinet LAURENT et GUERRE B.P. 32, F-69131 Ecully Cédex (FR)**

## Description

L'invention concerne un procédé pour la préparation de solutions de matériau ligno-cellulosique; elle se rapporte plus particulièrement à un procédé pour préparer de telles solutions propres au filage ou à tout autre mode de conformation; elle concerne également les solutions préparées de la sorte, particulièrement les solutions destinées à être conformées, notamment filées.

Un matériau ligno-cellulosique qui provient de végétaux (paille, maïs..) ou de bois, renferme essentiellement de la lignine et de la cellulose.

Il est bien connu d'utiliser la cellulose pour faire des fils, des fibres ou des films. Le procédé le plus répandu est le procédé dit "procédé viscose" qui nécessite toutefois de faire appel à une pâte à dissoudre qui est un produit cher et qui, dans la plupart des pays, doit être importé. Aussi, depuis longtemps, malheureusement sans succès, on a cherché à trouver une autre source d'approvisionnement qui soit d'un accès plus facile et plus disponible, donc moins cher et permettre ainsi d'être indépendant. Par ailleurs, le procédé viscose tel qu'il est exploité actuellement est malgré tout très complexe, nécessite des investissements très élevés, ce qui le rend cher, et enfin est très polluant.

Pour pallier ces derniers inconvénients, on a proposé alors de dissoudre la cellulose pure dans des solvants organiques. Par exemple, dans les brevets GB-A-1 144 048 et FR-A-2 398 758 et 2 423 559 (voir aussi Journal of Polymer Science, volume 22, 1984, pages 163 - 171), on a suggéré d'utiliser comme solvant un oxyde d'amine tertiaire. Cette solution donne d'excellents résultats, mais elle emploie toujours une cellulose pure, c'est-à-dire à une matière première chère et non facilement disponible.

De même, pour éviter la dégradation des chaînes de polymère de la cellulose, qui porte atteinte aux propriétés rhéologiques des produits, on a proposé d'ajouter à la solution de filage des produits organiques anti-oxydants. Malheureusement, ces composés augmentent le prix de revient.

L'invention pallie ces inconvénients. Elle vise un procédé pour la préparation de solutions de matériaux ligno-cellulosiques qui soit facile à mettre en oeuvre, donne d'excellents résultats, notamment au point de vue de la filabilité et surtout qui puisse être utilisé avec des sources de matières premières très variées facilement disponibles.

Ce procédé pour la préparation de solutions de matériaux ligno-cellulosiques se caractérise en ce qu'il consiste:

- à hydrolyser un matériau ligno-cellulosique de base par de la vapeur d'eau dans un réacteur sous pression;
- puis, à détendre brusquement ce matériau à pression atmosphérique;
- ensuite, à dissoudre ce matériau ligno-cellulosique hydrolisé dans une solution N-oxyde d'amine tertiaire contenant au plus 40 % en poids de matériau ligno-cellulosique hydrolisé;
- et enfin, à chauffer cette solution sous agitation.

En d'autres termes, l'invention réside essentiellement dans la combinaison de deux procédés connus séparément, à savoir:

- l'hydrolyse sous pression de matériau ligno-cellulosique, puis détente brusque;
- et la dissolution dans une solution d'oxyde d'amine tertiaire.

Dans les brevets US-A-1 355 618 de WH. MASON et CA-A-1 096 374 de DE LONG, on a décrit un procédé d'hydrolyse de matériaux ligno-cellulosiques qui consiste à placer des copeaux de bois ou de ces matériaux dans un réacteur sous pression où l'on introduit de la vapeur d'eau, ce qui provoque l'hydrolyse du matériau ligno-cellulosique. Ensuite, on laisse cette hydrolyse s'effectuer quelques secondes, puis on relâche brutalement la pression pour réaliser une explosion qui provoque la fibrillation du matériau ligno-cellulosique de départ. Ces produits sont très déstructurés, puisque la lignine est très dépolymérisée, les hémi-celluloses sont dégradées et la cellulose est également dépolymérisée. Après lavage pour éliminer les parties solubles telles que les sucres, les oligomères, et les hémi-celluloses, on recueille un produit hydrolysé contenant en poids environ 40 % de lignine et 60 % de cellulose. Ces proportions varient en fonction de la durée de la phase d'hydrolyse. Cette technique, connue sous le nom de "hydrolyse sous pression et relâchement" ou plus généralement sous l'expression anglaise "flash", est utilisée pour la fabrication de produits servant essentiellement à la préparation de panneaux agglomérés, de produits chimiques tels que de l'éthanol ou des colles, et des aliments pour le bétail. Toutefois, ces matériaux ligno-cellulosiques hydrolysés sont difficilement solubles dans la plupart des solvants organiques et ne se prêtent donc pas au filage ou à l'extrusion alors qu'en revanche, leur prix de revient reste très attractif.

Il est donc surprenant que l'utilisation des N-oxydes d'amine tertiaire, ce composé étant connu comme solvant des celluloses, puisse permettre de dissoudre les pâtes de matériaux ligno-cellulosiques hydrolysés, c'est-à-dire contenant de la cellulose et de la lignine, alors que l'on savait que ce solvant (oxyde d'amine tertiaire) était certes efficace pour la cellulose mais était totalement inefficace à l'égard de la lignine à l'état natif (tel que par exemple, elle se trouve dans les copeaux de bois). Ainsi, les enseignements de la technique n'orientaient nullement l'homme de métier vers ce type de composés solvants et au contraire même le dissuadait d'utiliser de tels solvants.

On peut penser que l'action de ce solvant sur la lignine est facilitée par l'accroissement de l'accessibilité par suite de la dépolymérisation provoquée par la phase d'hydrolyse et de la défibrillation provoquée par l'explosion. Cela montre bien qu'il y a relation entre cette phase d'hydrolyse et ce type de solvant.

Avantageusement, en pratique:

- la solution solvante est formée par un mélange de N-oxyde d'amine tertiaire et d'un composé hydroxylé, de préférence choisi dans le groupe constitué par l'eau et les alcools; le rapport molaire entre ledit composé hydroxylé et l'oxyde amine tertiaire est en pratique compris entre 0 et 1; si ce rapport molaire est égal à 0, le solvant à l'état anhydre se présentant sous forme solide, on risque de provoquer des explosions; en revanche, si ce rapport molaire est supérieur à 1, on a constaté que les propriétés de dissolution disparaissaient probablement par suite du fait que l'atome d'oxygène de l'oxyde d'amine était engagé dans d'autres liaisons hydrogènes qui le rendaient inactif;
- l'oxyde d'amine tertiaire est choisi dans le groupe constitué par l'oxyde de diméthyléthanolamine, l'oxyde de triéthylamine, le N-oxyde de (hydroxy-2-propoxy)-2-N, N-diméthylamine, certains N-oxydes de N-méthylamine monocycliques, comme le N-oxyde de N-méthylmorpholine, le N-oxyde de N-méthylpipéridine, le N-oxyde de N-méthylhomopipéridine, le N-oxyde de N-méthylpyrrolidine, ainsi que d'autres oxydes d'amines tertiaires dans lesquels le groupe oxyde d'amine se trouve en-dehors de l'anneau, comme le N-oxyde de di-N-méthylcyclohexylamine, le N-oxyde de diméthylhexylamine et le N-oxyde de N,N, diméthylbenzylamine; le pourcentage de composé hydroxylé (qui peut être l'eau) que l'on mélange au N-oxyde d'amine tertiaire dans le solvant de la cellulose varie d'un N-oxyde d'amine tertiaire à l'autre jusqu'à une valeur d'environ 30 % en poids par rapport au poids du solvant; comme on le sait, les N-oxydes d'amine tertiaire sont des composés bien connus décrits dans la littérature, par exemple dans le brevet américain US-A-3 508 941;
- la solution contient au maximum 40 % et de préférence entre 5 et 30 % en poids de matériaux ligno-cellulosiques hydrolysés par rapport au poids de la solution; ainsi, si ce solvant est le N-oxyde de N-méthylmorpholine, la teneur en eau du solvant peut atteindre environ 13 % en poids et la teneur en cellulose environ 35 % en poids par rapport au poids total de la solution;
- le matériau ligno-cellulosique de base est hydrolysé par la technique décrite ci-dessus sous pression puis détente brusque à pression atmosphérique; avantageusement, lorsque la pression d'hydrolyse est voisine de 4 MPa (40 bars), comme c'est le cas usuellement, la durée de l'hydrolyse est comprise entre 25 et 140 secondes; on a constaté que si à 4 MPa (40 bars), la durée d'hydrolyse est inférieure à 25 secondes, cette hydrolyse était insuffisante, de sorte que la solution obtenue contenait des parties insolubles, la rendant difficilement filable; en revanche, si la durée est supérieure à 140 secondes, on dépolymérisait beaucoup trop le matériau et on obtiendrait une solution trop liquide pour être filée; il va de soi que d'autres conditions d'hydrolyse, telles que préimprégnation du matériau, addition de réactifs chimiques pour favoriser la dépolymérisation de la lignine tout en préservant au maximum le degré de polymérisation de la cellulose, durée et pression différente, donnant un matériau identique, seront aptes à pouvoir être utilisées;
- le N-oxyde d'amine tertiaire peut être dilué également par un composé organique représentant jusqu'à 25 % en poids du poids total de la solution, afin de réduire la viscosité de la solution; on peut utiliser un liquide organique aprotique ne dissolvant pas la cellulose et ne réagissant pas chimiquement avec le solvant caractéristique (N-oxyde d'amine tertiaire), et qui ne provoque pas de dégradation de la cellulose mais présente toutefois un degré de polarité élevé. On peut citer le diméthylsulfoxyde, le N,N-diméthylformamide, le N,N-diméthylacétamide, la N-méthylpyrrolidinone, l'hexaméthylphosphorotriamide, l'acétonitrile, le sulfolane et similaires;
- le matériau ligno-cellulosique hydrolysé de base est moulu, puis mélangé à la composition solvante à base de N-oxyde d'amine tertiaire, et enfin le mélange est chauffé sous agitation à une température comprise entre 70 et 150° C, de préférence 75 à 130° C; dans une variante, l'étape de chauffage est effectuée sous vide contrôlé de manière à éliminer progressivement l'eau pour obtenir le rapport molaire eau/oxyde d'amine tertiaire anhydre souhaité;
- le matériau ligno-cellulosique de base est un mélange de copeaux de bois et de pâtes à papier éventuellement additionnés de polymères choisis dans le groupe constitué par les dérivés cellulosiques, les hemi-celluloses, les chitoses, les polyamides, les polyacrylates, les alcools polyvinyliques, les polysaccharides, et ce à raison par exemple de 10 % en poids.

Les solutions de matériaux ligno-cellulosiques préparées conformément à l'invention par dissolution de ces matériaux hydrolysés dans un N-oxyde d'amine tertiaire, ont une teneur élevée en matière dissoute (cellulose et lignine); elle présente en outre une viscosité appropriée qui leur permet facilement d'être façonnées notamment par extrusion ou filage.

Ces phases d'extrusion ou de filage s'effectuent de manière connue. Avantageusement, le non solvant de la pâte à conformer ou à filer, et l'agent de régénération pour le conformage (fil, film, structure cellulaire) sont généralement identiques. En pratique, on utilise l'eau.

Lorsque l'on désire transformer ces produits en films ou en fils, la pâte est extrudée de façon continue au travers de filières appropriées dans un bain de régénération (eau, alcool inférieur mono et polyvalent, etc.). Avantageusement, le bain de régénération contient de préférence jusqu'à 40 % en poids d'oxyde d'amine tertiaire.

Le procédé selon l'invention présente de nombreux avantages par rapport à ceux connus à ce jour. On peut citer:

- la possibilité de mettre en oeuvre comme matières premières de base des matériaux ligno-cellulosiques largement répandus et facilement disponibles, tels que la paille, le maïs et surtout le bois, ce qui permet d'abaisser considérablement le prix de revient de la matière première et de n'être plus tributaire d'importations;
- la possibilité de réaliser ainsi très économiquement des fibres pour des emplois très variés;
- l'effet anti-oxydant de la lignine qui préserve le degré de polymérisation de la cellulose;
- la possibilité de stocker facilement les solutions avant utilisation, même pendant plusieurs semaines et sans précaution particulière, ce que ne permet pas le procédé viscose actuel, ce qui ainsi n'oblige plus à filer en feu continu;
- la possibilité d'utiliser des techniques classiques dans l'industrie des thermoplastiques pour la conformation de ces solutions.

De la sorte, ces solutions peuvent être façonnées avec succès pour de multiples applications. A titre d'exemple, on peut citer:

- la fabrication de filaments continus ou de fibres discontinues;
- la fabrication de films;
- la fabrication de films étirés aptes à être fibrillés ou à être utilisés pour l'emballage ou comme membranes à porosité sélective;
- la fabrication de structures cellulaires du type des éponges.

La manière dont l'invention peut être réalisée et les avantages qui en découlent ressortiront mieux des exemples de réalisation qui suivent, donnés à titre indicatif et non limitatif. Sauf indications contraires, dans ces exemples, les parties et pourcentages sont exprimés en poids.

**Exemple 1:**

Par le procédé d'hydrolyse "Flash" décrit dans le brevet américain US-A-1 655 618, on hydrolyse dix grammes d'une pâte de bois de peupliers pendant une durée de 60 secondes sous 4 MPa (40 bars). Après brusque détente et lavage à l'eau, le produit moulu et séché contient environ 6 % d'eau.

A température ambiante, à 5 grammes de ce produit moulu (soit 15 % de la solution finale), on ajoute 28,33 grammes (soit 85 %) d'oxyde N-méthylmorpholine (MMNO) ayant une teneur en eau d'environ 13,5 %. Le mélange est homogénéisé, puis progressivement chauffé à 130°C dans un tube en verre pendant vingt minutes. Pendant tout le chauffage, la solution est agitée à la main notamment avec un agitateur en verre. Au bout de vingt minutes, la pâte de bois hydrolysée est totalement dissoute.

On file ensuite cette solution à 110°C au travers d'une filière de 300 microns de diamètre. Après un parcours d'environ vingt centimètres dans l'air, la solution est bobinée dans l'eau à une vitesse de 60 m/min. Le filament de cellulose régénéré obtenu est ensuite lavé à l'eau jusqu'à ce qu'il soit pratiquement débarrassé de N-oxyde d'amine tertiaire.

Les fils ainsi obtenus présentent les caractéristiques suivantes:

| | |
|---|---|
| - module (norme ASTM-D 638) | 14 GPa |
| - ténacité (norme ASTM-D 638) | 0,3 GPa |
| - allongement à la rupture (norme ASTM-D 638) | 4 %. |

A titre comparatif, ces valeurs correspondent sensiblement à celles des rayonnes dites bas de gamme, largement commercialisées actuellement.

**Exemple 2:**

On répète l'exemple 1 si ce n'est qu'on utilise comme solvant l'oxyde de diméthyléthanolamine (DMEAO), ainsi que les quantités de matières ciaprès, à savoir 3,83 g (11,5 %) de pâte de bois hydrolysé (temps d'hydrolyse: 40 secondes sous 4 MPa (40 bars) contenant environ 6 % d'eau, et 29,5 g (88,5 %) de DMEAO avec une teneur en eau d'environ 11 % en poids. Ce mélange est chauffé à 130°C pendant vingt minutes.

Cette solution, exempte d'insolubles est filée à 75°C et les fils obtenus présentent sensiblement les mêmes caractéristiques qu'à l'exemple 1.

**Exemple 3:**

On répète l'exemple 1 en portant la durée de la phase d'hydrolyse à 90 secondes. La solution obtenue est exempte de parties insolubles et peut être filée commodément à 73°C dans les mêmes conditions qu'à l'exemple 1.

**Exemple 4:**

A 3,75 g de pâte de bois hydrolysée (temps d'hydrolyse: 165 secondes sous 4 MPa (40 bars), contenant environ 6 % d'eau, on ajoute 28,9 g d'oxyde de N-méthylmorpholine (MMNO) ayant une teneur en eau d'environ 40 % en poids par rapport à la quantité d'oxyde d'amine. Le mélange est chauffé à 90°C sous vide contrôlé. On porte ensuite cette température à 100°C sur une durée d'environ 25 minutes. La solution est ensuite chauffée pendant cinq minutes à 120°C. La concentration finale en pâte de bois est d'environ 15 %. Cette solution ne présente plus de parties insolubles.

Toutefois, cette solution est trop liquide pour être filable.

**Exemple 5:**

On répète l'exemple 1 en n'effectuant l'hydrolyse que pendant vingt secondes.

La solution obtenue contient beaucoup de parties insolubles et n'est pas filable.

**Exemple 6:**

On répète l'exemple 1 avec les quantités de matière ci-après. A 2,6 g (13 % de pâte de bois hydrolysée et moulue) (temps d'hydrolyse: 90 secondes sous 4 MPa (40 bars), contenant environ 6 % d'eau, on ajoute 0,2 g d'un composé additif anti-oxydant (propylgalate à 1 %) et 0,7 g (3,5 %) d'une pâte kraft ayant un degré de polymérisation de 1500 et contenant environ 5 % d'eau. A cette composition, on ajoute 16,7 g (83,5 % d'oxyde N-méthylmorpholine (MMNO) ayant une teneur en eau d'environ 13,5 % en poids.

En d'autres termes, on cherche ainsi à augmenter le degré de polymérisation et à diminuer la teneur en lignine. Le mélange est ensuite chauffé à 120°C pendant quinze minutes.

La solution obtenue est exempte de parties insolubles. Après filage à 90°C dans les mêmes conditions qu'à l'exemple 1 mais avec une vitesse de 100 m/min, on obtient un fil ayant les caractéristiques suivantes:

| | |
|---|---|
| - module | 27 GPa |
| - ténacité | 0,5 GPa |
| - allongement | 4 %. |

Ces fils sont donc comparables aux meilleurs fils commerciaux de rayonne actuels, voire même à des fils rayonne haute ténacité.

Ainsi, avec 80 % de matériau ligno-cellulosique à très bas prix, auquel on ajoute un complément de pâte Kraft, également bon marché, on obtient un matériau comparable aux meilleures viscoses actuelles. Ainsi, à performance égale, cela se traduit par une économie très substantielle sur la matière première puisque celle-ci est de l'ordre d'au moins 1 à 5. En outre, cette technique peut être exploitée avec des matériaux facilement disponibles de partout, ce qui évite des problèmes d'importation.

**Exemple 7:**

On répète l'exemple 6 en dégazant et filtrant la solution obtenue avant filage comme il est usuel de le faire en viscose. On améliore les propriétés mécaniques des fils obtenus.

**Exemple 8:**

On répète l'exemple 2 en ajoutant comme co-solvant 1,4 g de DETA (diéthylenetriamine) à 12,282 g de DMEAO ayant une teneur en eau d'environ 5,5 % en poids par rapport à la quantité d'oxyde d'amine. Le mélange est ensuite homogénéisé à 90°C puis additionné de 2,3 g de pâte de bois hydrolysée (temps d'hydrolyse: 60 secondes sous 4 MPa (40 bars). La solution est chauffée pendant 20 minutes à 90°C. L'addition de DETA facilite le gonflement et réduit la viscosité.

La solution obtenue est exempte d'insolubles et est filée à 90°C avec succès dans les mêmes conditions opératoires qu'à l'exemple 2.

**Revendications**

1. Procédé pour la préparation de solutions de matériaux ligno-cellulosiques, caractérisé en ce qu'il consiste:
   - à hydrolyser un matériau ligno-cellulosique de base par de la vapeur d'eau dans un réacteur sous-pression;
   - puis à détendre brusquement ce matériau à pression atmosphérique;
   - ensuite, à dissoudre ce matériau ligno-cellulosique hydrolysé dans une solution N-oxyde d'amine tertiaire contenant au plus 40 % en poids de matériau ligno-cellulosique hydrolysé;
   - enfin, à chauffer cette dissolution sous agitation.

2. Procédé selon la revendication 1, caractérisé en ce que la solution solvante est formée par un mélange de N-oxyde d'amine tertiaire et d'un composé hydroxylé choisi dans le groupe constitué par l'eau et les alcools à bas poids moléculaire, le rapport molaire entre ledit composé hydroxylé et l'oxyde d'amine tertiaire étant compris entre 0 et 1.

3. Procédé selon la revendication 1, caractérisé en ce que l'oxyde d'amine tertiaire solvant est choisi dans le groupe constitué par l'oxyde de diméthylèthanolamine, l'oxyde de triéthylamine, le N-oxyde de (hydroxy-2-propoxy)-2-N,N-diméthylamine, le N-oxyde de N-méthylmorpholine, le N-oxyde de N-méthylpipéridine, le N-oxyde de N-méthylhomopipéridine, le N-oxyde de N-méthylpyrrolidine, le N-oxyde de di-N-méthylcyclohexylamine, le N-oxyde de diméthylhexylamine et le N-oxyde de N,N, diméthylbenzylamine.

4. Procédé selon la revendication 1, caractérisé en ce que l'hydrolyse s'effectue sous une pression voisine de 4 MPa (40 bars) pendant une durée comprise entre 25 et 140 secondes.

5. Procédé selon la revendication 4, caractérisé en ce que le matériau ligno-cellulosique hydrolysé de base est moulu, lavé à l'eau, séché partiellement puis mélangé à la composition solvante à base de N-oxyde d'amine tertiaire, puis enfin le mélange est chauffé sous agitation à une température comprise entre 70 et 150°C, de préférence comprise entre 115 et 130°C.

6. Procédé selon la revendication 1, caractérisé en ce que le matériau ligno-cellulosique de base est un mélange de copeaux de bois hydrolysé et de pâte à papier.

7. Procédé selon la revendication 6, caractérisé en ce que le mélange de copeaux de bois hydrolysé et de pâtes à papier est additionné d'un polymère choisi dans le groupe constitué par les polyamides, les polysaccharides, les polyacrylates, les alcools polyvinyliques, les dérivés cellulosiques et les hémi-celluloses.

8. Solution de matériau ligno-cellulosique caractérisée en ce qu'elle contient un matériau ligno-cellulosique hydrolysé, dissout dans une composition solvante à base de N-oxyde d'amine tertiaire.


**Patentansprüche**

1. Verfahren zur Herstellung von Lösungen von lignocellulosischen Materialien, gekennzeichnet durch die Schritte:
- Hydrolysieren eines lignocellulosischen Basismaterials mit Wasserdampf in einem unter Druck stehenden Reaktor;
- dann, schlagartiges Entspannen des Materials auf atmosphärischen Druck;
- daraufhin Auflösen des hydrolysieren lignocellulosischen Materials in einer Lösung eines N-Oxids eines tertiären Amins, so daß diese höchstens 40 Gew.-% an hydrolysiertem lignocellulosischen Material enthält;
- schließlich, Erwärmen dieser Lösung unter Bewegen derselben.

2. Verfahren nach Anspruch 1, dadurch gekennzeichnet, daß die Lösungsmittellösung aus einer Mischung aus einem N-Oxid eines tertiären Amins und einer hydroxilierten Verbindung, ausgewählt aus der Gruppe bestehend aus Wasser und Alkoholen niederen Molekulargewichts besteht, wobei das Molverhältnis zwischen der hydroxilierten Verbindung und dem N-Oxid des tertiären Amins zwischen 0 und 1 liegt.

3. Verfahren nach Anspruch 1, dadurch gekennzeichnet, daß das lösende N-Oxid des tertiären Amins ausgewählt aus der Gruppe bestehend aus Dimethylethanolaminoxid, Triethylaminoxid, (Hydroxy-2-propoxy)-2-N,N-dimethylamin-N-oxid, N-Methylmorpholin-N-oxid, N-Methylpiperidin-N-oxid, N-Methylhomopiperidin-N-oxid, N-Methylpyrrolidin-N-oxid, di-N-Methylcyclohexylamin-N-oxid, Dimethylhexylamin-N-oxid und N,N-Dimethylbenzylamin-N-oxid ist.

4. Verfahren nach Anspruch 1, dadurch gekennzeichnet, daß die Hydrolyse bei einem Druck von etwa 4 MPa (40 bar) während einer Dauer zwischen 25 und 140 Sekunden durchgeführt wird.

5. Verfahren nach Anspruch 4, dadurch gekennzeichnet, daß das hydrolysierte lignocellulosische Basismaterial gemahlen, mit Wasser gewaschen, teilweise getrocknet, anschließend mit der Lösungssubstanz auf Basis eines N-Oxids eines tertiären Amins vermischt wird, und daß schließlich die Mischung unter Bewegen auf eine Temperatur zwischen 70 und 150°C, vorzugsweise zwischen 115 und 130°C erwärmt wird.

6. Verfahren nach Anspruch 1, dadurch gekennzeichnet, daß das lignocellulosische Basismaterial eine Mischung aus hydrolysierten Holzspänen und Papierstoffen ist.

7. Verfahren nach Anspruch 6, dadurch gekennzeichnet, daß der Mischung aus hydrolysierten Holzspänen und Papierstoffen ein Polymer, ausgewählt aus der Gruppe bestehend aus den Polyamiden, den Polysacchariden, den Polyacrylaten, den Polyvinylalkoholen, den Cellulosederivaten und den Hemicellulosen, beigemengt wird.

8. Lösung an lignocellulosischen Materialien, dadurch gekennzeichnet, daß sie ein hydrolysiertes lignocellulosisches Material enthält, das in einer Lösungsmittelzusammensetzung auf Basis von Tertiäramin-N-oxid aufgelöst ist.


**Claims**

1. Method for the preparation of solutions of ligno-cellulosic material, characterized in that it consists:
- in hydrolyzing a basic ligno-cellulosic material in a reactor under pressure by water vapour;
- in suddenly releasing this material at atmosphere pressure;
- then, in dissolving the hydrolyzed ligno-cellulosic material in a solution of tertiary amine N-oxide containing at most 40 % by weight of hydrolyzed ligno-cellulosic material;
- finally in heating with stirring this dissolution.

2. Method according to claim 1 wherein the solvent solution is formed by a mixture of a tertiary amine N-oxide and a hydroxylated compound selected from the group constituted of water and low molecular weight alcohols, the molar ratio between said hydroxylated compound and the tertiary amine N-oxide being included between 0 and 1.

3. Method according to claim 1, characterized in that the solvent tertiary amine oxide is selected from the group constituted by dimethylethanolamine oxide, triethylamine oxide, the N-oxide of (hydroxy-2-propoxy)-2-N,N-dimethylamine, the N-oxide of N-methylmorpholine, the N-oxide of N-methylpiperidine, the N-oxide of N-methylhomopiperidine, the N-oxide of N-methylpyrrolidine, the N-oxide of di-N-methylcyclohexylamine, the N-oxide of dimethylhexylamine and the N-oxide of N,N dimethylbenzylamine.

4. Method according to claim 1, characterized in that hydrolisis is effected under a pressure close to 4 MPa (40 bars) for a duration of between 25 and 140 seconds.

5. Method according to claim 4 characterized in that the basic hydrolyzed ligno-cellulosic material is ground, washed with water, partially dried then mixed with the solvent composition based on tertiary amine N-oxide, then the mixture is finally heated with stirring to a temperature of between 70 and 150°C, preferably between 115 and 130°C.

6. Method according to claim 1, characterized in that the basic ligno-cellulosic material is a mixture of hyrolyzed wood and of paper pulps.

7. Method according to claim 6, characterized in that the mixture of hydrolyzed wood and of paper pulps is added with a polymer selected from the group constituted by polyamides, polysaccharides, polyacrylates, polyvinyl alcohols, cellulosic derivatives and hemi-celluloses.

8. Solution of ligno-cellulosic material, characterized in that it contains a hydrolyzed ligno-cellulosic material dissolved in a solvent composition based on tertiary amine N-oxide.